# DEMANDE DE BREVET EUROPEEN

(11) **EP 0 643 523 A1**
(43) Date de publication de la demande: **15.03.1995**
(21) Numéro de dépôt: 94402016.3
(22) Date de dépôt: 09.09.1994
(51) Int. Cl.: H04M 11/08

(54) **Système de commande interactive pour installation multiservice**

(30) Priorité: 09.09.1993 FR 9310729
(71) Demandeur: ALCATEL BUSINESS SYSTEMS, F-75008 Paris (FR)
(72) Inventeur: Janin, Michel, F-92190 Meudon (FR); Nardot, Jean-Claude, c/o Locatel, F-78306 Poissy Cédex (FR)
(74) Mandataire: Schaub, Bernard

(57) **Abrégé**

Système permettant une commande interactive d'application(s) par des utilisateurs dans une installation multiservice disposant d'un central téléphonique (1), d'un serveur pour programmes télévisuels (4) et de modules d'utilisateur (6) associant chacun au moins un téléphone (2) et un téléviseur (5), le serveur étant doté de moyens (12, 13) pour permettre une transmission d'un programme télévisuel interactif, fourni par un ensemble d'exploitation (11). Ce dernier est relié au central téléphonique et dispose de moyens (16, 17) pour produire des commandes à partir d'informations transmises par le central à réception de signaux codés émis par le dispositif de commande (18) d'un téléphone de module, en relation avec des informations de programme télévisuel interactif affichées par le téléviseur, associé à ce téléphone dans le même module, lors de l'émission des signaux codés par le téléphone considéré.

## Description

L'invention concerne un système permettant une commande interactive d'application(s) par des utilisateurs à qui une communication d'informations est susceptible d'être effectuée par l'intermédiaire de téléviseurs dans une installation multiservice disposant d'un serveur de distribution de programmes télévisuels, d'un central téléphonique et de modules d'utilisateur associant chacun un téléphone qui est rattaché au central téléphonique et un téléviseur qui est desservi par l'intermédiaire du serveur et qui est préférablement équipé d'un dispositif émetteur de télécommande mis à disposition des utilisateurs.

Ce système a pour objet de permettre aux utilisateurs d'accéder aux services assurés par un serveur télématique dans le cadre d'une installation donnée, par l'intermédiaire du téléphone et du téléviseur mis à leur disposition. Il s'adresse notamment aux installations prévues pour desservir des utilisateurs passagers auxquels la mise à disposition d'un téléphone et d'un téléviseur est habituellement assurée, ce qui est classiquement le cas des installations hospitalières ou hôtelières.

Les services envisagés sont notamment du genre de ceux qui sont habituellement accessibles par l'intermédiaire d'un ordinateur raccordé par modem au réseau téléphonique ou d'un terminal télématique, à écran et clavier, notamment d'un terminal de type vidéotex.

Or pour diverses raisons, notamment pratiques et économiques, il n'est pas envisagé d'attribuer temporairement et systématiquement des ordinateurs ou des terminaux télématiques à disposition des utilisateurs, comme cela se fait pour les téléviseurs et les téléphones.

L'invention propose donc un système permettant d'exploiter les téléviseurs et téléphones d'une installation telle qu'évoquée ci-dessus pour permettre aux utilisateurs de cette installation d'accéder à des services interactifs prévus dans l'installation ou éventuellement extérieurs à cette installation et accessibles à travers elle.

Ce système permet une commande interactive d'application(s) par des utilisateurs à qui une communication d'informations est susceptible d'être effectuée par l'intermédiaire de téléviseurs dans une installation multiservice disposant d'un central téléphonique, d'un serveur de distribution de programmes télévisuels et de modules d'utilisateur associant chacun un téléphone rattaché au central téléphonique et un téléviseur qui est desservi par l'intermédiaire du serveur et qui est préférablement équipé d'un dispositif émetteur de télécommande mis à disposition des utilisateurs. Le serveur est supposé doté de moyens pour permettre la diffusion d'au moins un programme télévisuel interactif, comportant à cet effet des informations fournies selon un standard approprié, par exemple vidéotex, VGA ou autre, ce programme est supposé fourni par un ensemble d'exploitation organisé autour d'au moins un ordinateur.

Selon une caractéristique de l'invention, l'ensemble d'exploitation est relié à un agencement de commande et de gestion du central téléphonique et il dispose de moyens pour produire des indications de commande exploitables par l'homme ou par une machine, à partir d'informations transmises par l'agencement de commande et de gestion du central à réception des signaux codés émis à partir du dispositif de commande d'un téléphone de module, en relation avec les informations de programme télévisuel interactif qui avaient été envoyées par l'ensemble d'exploitation au téléviseur, associé à ce téléphone dans le même module d'utilisateur, et qui étaient affichées par ce téléviseur, lors de l'émission des signaux codés de commande par l'intermédiaire du téléphone considéré. L'invention, ses caractéristiques et ses avantages sont précisés dans la description qui suit en liaison avec les figures évoquées ci-dessous.

La figure 1 présente un schéma d'une installation équipée d'un système permettant une commande interactive d'applications par des utilisateurs disposant de modules qui associent chacun un téléviseur et un téléphone.

La figure 2 présente une variante relative à un système permettant une commande interactive d'applications communes à plusieurs ensembles de modules appartenant à une ou plusieurs installations.

La figure 3 présente une variante de module d'utilisateur.

Le système selon l'invention est destiné à être mis en oeuvre dans une installation disposant d'un central téléphonique 1, par exemple de type numérique usuel, permettant de desservir une pluralité de téléphones 2. Ces derniers sont répartis dans l'installation selon les besoins et rattachés au central téléphonique 1 pour permettre à des utilisateurs de communiquer entre eux et usuellement avec d'autres utilisateurs situés hors de l'installation; de manière connue et non figurée, le central téléphonique 1 est donc supposé relié à d'autres centraux téléphoniques par l'intermédiaire de liaisons prévues à cet effet.

Les téléphones 2 sont préférablement du type poste à touches permettant l'envoi de signaux numériques de commande, bien que cela ne soit pas indispensable.

Le central téléphonique 1 est régi par un agencement de commande et de gestion 0 et dans la plupart des installations envisagées, il est aussi prévu un agencement d'exploitation des postes comportant au moins un terminal spécialisé 3. Cet agencement d'exploitation est prévu pour la gestion des postes et en particulier pour permettre l'affectation de ces derniers aux utilisateurs, afin qu'il soit possible d'associer les actions entreprises au niveau de chaque téléphone à l'utilisateur auquel ce téléphone a temporairement été affecté, ceci notamment à des fins de facturation.

L'installation considérée est aussi supposée disposer d'un serveur 4 chargé d'assurer une distribution de programmes télévisuels à des téléviseurs 5 qui sont mis à disposition des utilisateurs dans l'installation.

Dans les installations envisagées, il est supposé qu'il est prévu des modules d'utilisateur 6 associant un téléphone 2 et un téléviseur 5 dans un même local, par exemple dans une même chambre susceptible d'être mise à disposition d'un ou de plusieurs utilisateurs.

Il est aussi préférablement prévu que les téléviseurs 5 soient dotés chacun d'un équipement récepteur de télécommande 7 prévu pour être actionné à partir d'un dispositif émetteur de télécommande 8 mis à disposition des utilisateurs, étant entendu que, à défaut, les téléviseurs peuvent être actionnés au moyen des commandes qu'ils portent eux-mêmes en ce cas.

Les dispositifs émetteurs 8 sont par exemple de classiques boîtiers de télécommande par signaux infrarouges, qui permettent une sélection d'un quelconque des programmes diffusés disponibles au niveau du téléviseur, ainsi que des réglages visuels et sonores de ce téléviseur, à courte distance par l'utilisateur.

Le serveur 4 comporte généralement un équipement de tête de réseau 9 lui permettant de recevoir des programmes de télévision susceptibles de provenir de différentes sources locales ou distantes, par diffusion hertzienne, éventuellement via un satellite, ou par voie câblée.

Ce serveur 4 est classiquement associé à un ensemble coupleur 10, usuellement de type modulaire, qui permet de distribuer les programmes reçus au niveau de la tête de réseau aux différents téléviseurs, le plus généralement par l'intermédiaire de câbles de distribution, ici symbolisés par les liaisons L.

Il est connu d'associer un ensemble d'exploitation 11 à un serveur 4 pour disposer de possibilités d'exploitation particulières dans le cadre de l'installation desservie.

Un tel ensemble d'exploitation 11 est par exemple mis en oeuvre, de manière connue en soi, pour diffuser un programme spécifique à l'intérieur d'une installation, en plus des programmes d'intérêt général parvenus par l'intermédiaire de la tête de réseau. Un tel programme spécifique est par exemple destiné à fournir des informations particulières aux utilisateurs d'une installation, par exemple des informations sur des possibilités, notamment de service, qui leur sont offertes dans le cadre de l'installation.

Un tel ensemble d'exploitation 11 est également susceptible d'être mis en oeuvre pour réaliser une distribution sélective des différents programmes disponibles aux différents téléviseurs, en fonction des besoins et/ou des choix des utilisateurs auxquels ces téléviseurs sont affectés.

Un exemple d'ensemble de ce genre est notamment décrit dans le brevet français 2650464, il implique l'addition d'un mélangeur, tel 12, entre la tête de réseau 9 et l'ensemble coupleur 10 d'une installation pour insérer des informations sélectives de commande, à destination des téléviseurs dans un des canaux de télédiffusion de programme qui n'est pas exploité pour un programme diffusé à partir de la tête de réseau. Ces informations de commande sont produites par l'ensemble d'exploitation 11 et transmises par un canal de télédiffusion, ici dit de service, prévu à cet effet, un modulateur 13 étant inséré entre l'ensemble d'exploitation 11 et le mélangeur 12 pour permettre la mise des informations de commande sous une forme aisément transmissible par l'intermédiaire d'un canal de télédiffusion. Dans une forme de réalisation, les informations numériques de commande fournies par l'ensemble d'exploitation 11 sont d'abord modulées en mode FSK et les signaux obtenus sont modulés FM pour être transmis dans le canal de service choisi.

Chaque téléviseur 5 est préférablement individualisé et, à cet effet, il comporte, outre un classique équipement audio-vidéo 20, un circuit adressable 14 apte à repérer les informations qui lui sont sélectivement adressées parmi toutes celles qui sont diffusées par l'intermédiaire du canal de réception, ici dit de service.

Ce circuit adressable 14 est associé à un démodulateur, non figuré, pour assurer la séparation des données, constituant les informations sélectives de commande qui sont à adresser à un microprocesseur interne pour traitement, des signaux radiofréquences correspondant aux images à faire diffuser par le téléviseur 5 qui le comporte, lorsque ce téléviseur est accordé sur le canal de réception, dit de service. Le circuit adressable 14 dispose aussi de moyens de stockage lui permettant éventuellement de conserver temporairement plusieurs pages d'écran, de manière à réduire les temps d'accès et à améliorer le confort d'interactivité pour l'utilisateur.

Le microprocesseur du circuit adressable 14 assure aussi la gestion des commandes envoyées au téléviseur 5 qui le comporte, par l'intermédiaire d'un dispositif émetteur de télécommande 8. Cette gestion est réalisée en tenant compte des contraintes qui sont imposées par l'ensemble d'exploitation 11 et qui sont transmises sous forme d'informations sélectives par le canal de service.

L'ensemble d'exploitation 11 comporte une unité de commande réalisée sur la base d'au moins un ordinateur auquel des périphériques d'exploitation sont usuellement associés, ceux-ci étant représentés ici par une imprimante 15.

L'ordinateur de l'ensemble d'exploitation 11 comporte un programme applicatif frontal 16 chargé de la mise en oeuvre des procédures de génération des informations sélectives de commande pour le programme télévisuel interactif qui sont destinées à être diffusées à destination des divers téléviseurs 5 de l'installation considérée, en fonction des possibilités de l'installation, des besoins propres à cette installation et des requêtes des utilisateurs. Il permet aussi de stocker les informations qui sont susceptibles d'être diffusées par l'intermédiaire du canal de service afin d'être affichées sur les téléviseurs de l'installation.

Ce programme applicatif n'est pas décrit ici dans la mesure où, de constitution ordinaire en ce domaine, il ne fait pas l'objet par lui-même de la présente invention. Un programme de ce genre est notamment mis en oeuvre dans les systèmes de télédistribution commercialisés par la société LOCATEL qui appliquent l'enseignement donné par le brevet français 2650464 évoqué plus haut.

Selon l'invention, l'ordinateur de l'ensemble d'exploitation 11 est relié au central téléphonique 1, ici par une liaison de transmission LT, de manière à pouvoir dialoguer, préférablement sous forme numérique, avec l'agencement de commande et de gestion 0 de ce dernier.

De plus un programme d'exploitation combinée 17 est prévu, par exemple dans ce même ordinateur, pour permettre de commander, de manière connue en soi, des opérations prévues au niveau du programme applicatif 16 par des commandes qui sont transmises, par liaison(s) de transmission LT, depuis l'agencement de commande et de gestion 0 du central téléphonique 1 et qui ont été déclenchées par une action d'un utilisateur au moyen du téléphone 2 dont il dispose.

Ce programme d'exploitation combinée 17 est également organisé de manière connue en elle-même pour permettre de prendre en compte les actions de commande produites par un utilisateur, au moyen du téléphone 2 dont il dispose au niveau d'un module d'utilisateur 6, en corrélation avec les informations de programme télévisuel interactif, alors affichées par le téléviseur 5 de ce module d'utilisateur.

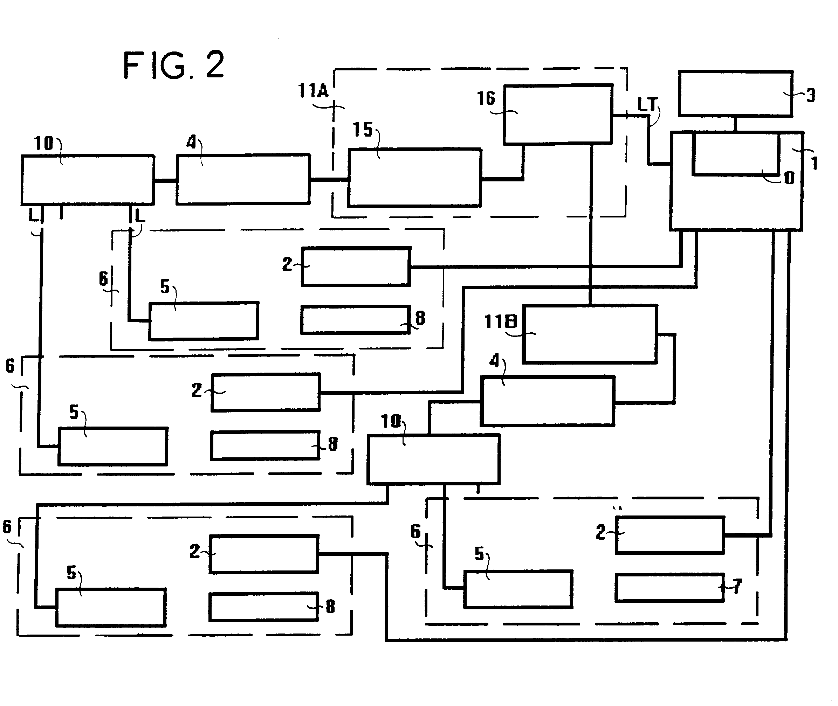

Il est à noter que le programme d'exploitation combinée 17 peut éventuellement être traité séparément du programme applicatif 16, ainsi que montré en liaison avec la figure 2.

Un sous-ensemble central 11A, éventuellement analogue à l'ensemble d'exploitation 11 précédemment évoqué, assure la mise en oeuvre du programme d'exploitation combinée 17 pour plusieurs sous-ensembles locaux 11B qui assurent chacun la mise en oeuvre du programme applicatif 16 pour un groupe différent de modules d'utilisateur 6. Chaque sous-ensemble local 11B, destiné à desservir un groupe, est alors organisé autour d'un ordinateur, non figuré, auquel une copie de programme applicatif 16 est attribuée. Un groupe correspond par exemple à une installation partageant au moins une même application télématique avec d'autres installations reliées comme elle au même sous-ensemble central 11A à cet effet.

Un groupe peut aussi être constitué par une des parties d'une installation comportant un sous-ensemble central 11A et des sous-ensembles locaux 11B, distants, le sous-ensemble central 11A étant susceptible de comporter les deux programmes 16 et 17 et par conséquent de desservir lui-même les modules d'utilisateur 6 d'un groupe, comme montré à titre d'exemple sur la figure 2.

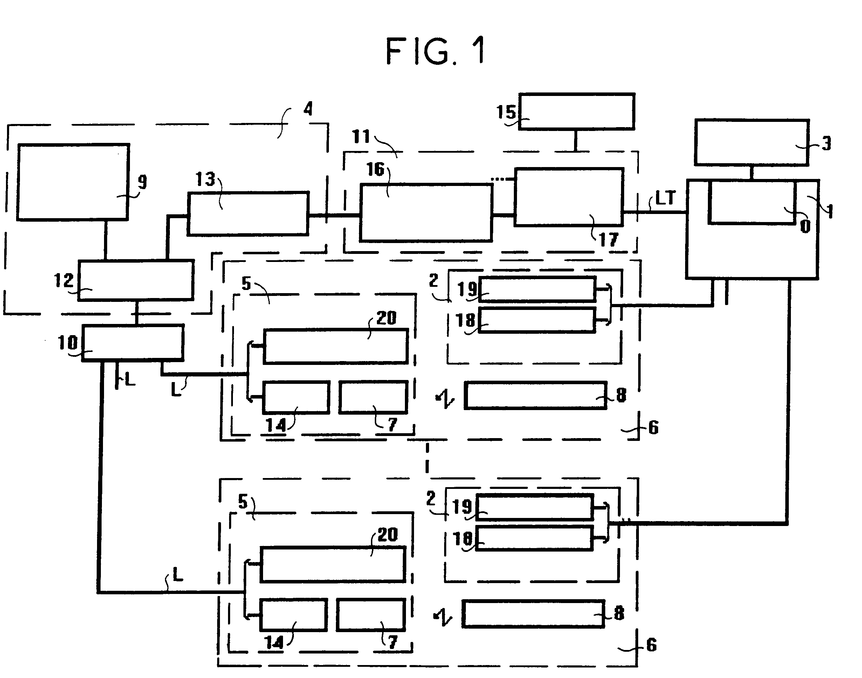

Un serveur 4 et un ou plusieurs modules de l'ensemble coupleur 10 sont associés à chaque sous-ensemble local 11B d'une manière analogue à celle évoquée en liaison avec la figure 1 et pour les mêmes raisons.

Dans chacun des exemples de réalisation d'installation évoqués et par exemple d'une installation telle que présentée en figure 1, il est éventuellement possible à un utilisateur de sélectionner le programme télévisuel interactif diffusé par un canal de service de l'installation par divers moyens. Cette sélection peut être classiquement être obtenue par action directe de l'utilisateur sur le téléviseur 5 dont il dispose, après mise en marche de ce dernier. L'utilisateur peut aussi sélectionner un programme au moyen du dispositif émetteur de télécommande 8 alors associé au téléviseur 5 dans le module d'utilisateur 6 mis à sa disposition, il peut éventuellement obtenir la sélection d'un programme par envoi d'une commande particulière à l'aide du poste téléphonique inclus dans le même module d'utilisateur que le téléviseur considéré. Le téléviseur est alors généralement en état de veille et il est alors apte à répondre sans préalable à toute sélection du canal de service; il peut éventuellement être préalablement mis en marche soit à partir du poste téléphonique associé au moyen d'une commande prévue à cet effet, soit encore par l'ensemble d'exploitation 11.

Le programme télévisuel interactif est par exemple affecté à des offres de service selon une présentation de type vidéotex, qui propose une première page affichable par l'intermédiaire de laquelle plusieurs options sont offertes, éventuellement suite à une ou plusieurs pages de présentation.

A partir du moment où au moins l'une des options affichées à un instant donné sur un téléviseur 5 d'un module d'utilisateur 6 implique une action qui n'est pas susceptible d'être obtenue par l'intermédiaire d'un dispositif émetteur de télécommande 8, il est prévu et préférablement indiqué qu'une commande correspondante est à réaliser par l'intermédiaire du téléphone 2 du module d'utilisateur.

De telles options sont notamment celles qui requièrent une action spécifique au niveau de l'ensemble d'exploitation 11, sachant qu'en règle générale les téléviseurs 5 envisagés ici et leurs éventuels dispositifs émetteurs de télécommande 8, n'ont aucun moyen leur permettant de communiquer avec cet ensemble d'exploitation.

Il est donc demandé à un utilisateur dans cette situation d'utiliser le téléphone du module d'utilisateur 6 dont il dispose pour envoyer des commandes, selon les indications alors affichées sur le téléviseur qu'il regarde.

Une première commande doit être envoyée par cet utilisateur au central téléphonique 1 de l'installation au moyen du téléphone 2 dont il dispose pour signaler à ce central téléphonique qu'il commence un processus de commande pour lequel il demande à être relié à l'ensemble d'exploitation 11 de l'installation et qu'en conséquence les commandes émises par ce téléphone 2 à partir de la mise en liaison avec cet ensemble d'exploitation sont destinées à lui être transmises, jusqu'à commande contraire émanant du téléphone 2 utilisé ou de l'ensemble 11.

Suivant les besoins et les possibilités propres à l'installation, la demande initiale de l'utilisateur peut être induite de différentes manières par l'intermédiaire du dispositif de commande 18 équipant le téléphone 2 dont il dispose, en sus de la partie audio 19. L'une de ces manières classiques est l'actionnement d'une touche de clavier, soit spécialement prévue à cet effet sur le téléphone, soit autrement inexploitée en usage téléphonique normal, telle l'une des touches additionnelles A, B, C, D, # ou * de nombreux claviers téléphoniques; la numérotation au clavier du téléphone d'un nombre particulier ou d'une combinaison particulière est l'une des autres possibilités envisageables.

La mise en oeuvre de ces diverses possibilités peut être envisagée avant ou après décrochage du combiné du poste, suivant les installations, elles peuvent permettre de déclencher une mise en marche du téléviseur associé au poste téléphonique dans un module d'utilisateur.

Suite à une opération de mise en liaison, les données d'identification du téléphone 2 d'un utilisateur sont communiquées par liaison LT à l'ensemble d'exploitation 11 depuis le central téléphonique desservant cet utilisateur.

L'ensemble d'exploitation 11 enregistre la demande de l'utilisateur considéré et initie alors l'envoi, par l'intermédiaire du canal de service, des données correspondant par exemple à une page écran à afficher sur le téléviseur dont cet utilisateur dispose. Comme connu, plusieurs pages peuvent successivement être transmises, si elles n'impliquent pas de choix; la dernière page alors transmise étant alors celle dans laquelle apparaissent les options proposées parmi lesquelles un choix est à effectuer.

Si, comme indiqué plus haut, un choix implique une transmission d'information de l'utilisateur considéré à l'ensemble d'exploitation 11, cet utilisateur actionne le clavier de son téléphone 2 en accord avec les indications qu'il connaît, qu'il a lu, ou qu'il lit, sur son téléviseur 5, par exemple en envoyant un nombre correspondant à un des choix possibles.

La transmission de ce chiffre par le central téléphonique 1 à l'ensemble d'exploitation 11 entraîne notamment l'envoi, par l'intermédiaire du canal de service, des données numériques correspondant à au moins une page écran, éventuellement suivante s'il en est.

Lorsque les possibilités de choix sont épuisées, la ligne téléphonique desservant le téléphone employé par l'utilisateur considéré est libérée, soit sur action de cet utilisateur, par exemple suite à l'affichage d'une recommandation en ce sens sur le téléviseur, soit sur requête de l'ensemble d'exploitation 11 au central téléphonique 1.

Les divers choix exprimés par un utilisateur et transmis à l'ensemble d'exploitation 11, comme indiqué ci-dessus, correspondent à des indications de commande exploitables par l'homme et/ou par une machine. Ces indications sont susceptibles d'être temporairement stockées avant transmission pour exécution immédiate ou différée. Cette transmission peut par exemple être effectuée vers un système approprié, non représenté, avec lequel l'ensemble d'exploitation 11 est apte à communiquer, elle peut également être effectuée par l'intermédiaire d'un support indépendant sur lequel les choix sont reportés. Ceci est notamment le cas, si ces choix sont transcrits sur papier par exemple par l'intermédiaire d'une imprimante reliée à l'ensemble d'exploitation 11, telle l'imprimante 15 montrée sur la figure unique.

Selon une variante de l'invention, le système selon l'invention peut éventuellement permettre de commander plus largement et éventuellement totalement un téléviseur 5 à partir du téléphone 2 du même module d'utilisateur 6 par utilisation des touches du clavier de ce téléphone, après mise en liaison du téléphone avec l'ensemble d'exploitation 11 de l'installation par l'intermédiaire du central téléphonique d'une manière analogue à celle définie plus haut. Les touches à actionner sont alors soit des touches multifonctions du clavier qui sont susceptibles d'être identifiées d'une manière particulière, notamment par une indication visuelle, tel qu'un éclairement spécifique ou un signalement particulier sur un éventuel afficheur du téléphone, lorsqu'elles sont actives pour la commande du téléviseur. Ces touches peuvent bien entendu être des touches prévues uniquement à cet effet sur le téléphone 2.

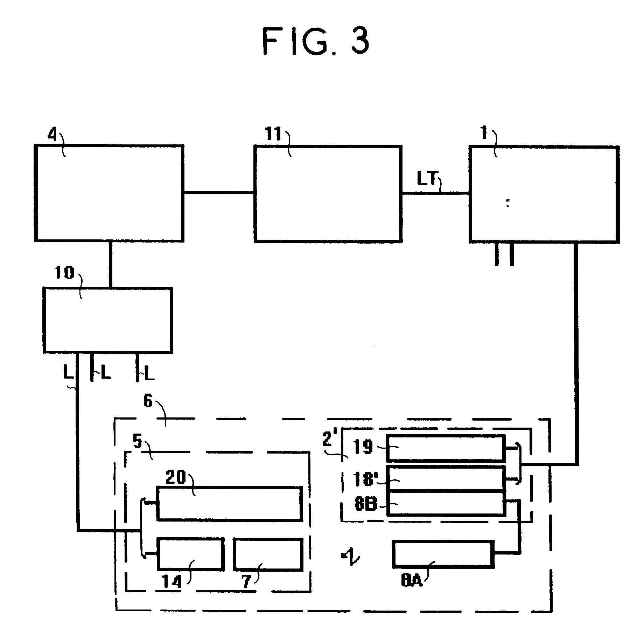

Selon une autre variante de l'invention proposée en figure 3, la télécommande partielle du téléviseur 5 d'un module d'utilisateur 6, soit essentiellement la sélection des canaux de programme et des réglages visuels et sonores du téléviseur, peut être obtenue par voie sans fil et notamment par voie infrarouge comme classiquement prévu, à partir du téléphone 2' associé à ce téléviseur dans le même module 6. L'émetteur de télécommande, tel 8A, sans fil, classiquement contenu dans le boîtier d'un dispositif de télécommande, est alors séparé du reste du dispositif, tel 8B, qui est intégré dans le dispositif de commande 17', par exemple à clavier, du téléphone 2 et il est alors relié à ce téléphone 2' de manière à être commandé à partir dudit clavier, non figuré.

Ce clavier comporte alors soit des touches spécifiquement prévues pour cette télécommande, soit des moyens de commutation permettant de transmettre les signaux découlant des touches alternativement soit vers la ligne téléphonique, soit vers l'émetteur de télécommande.

La première commutation évoquée ci-dessus est mise en oeuvre en cas d'exploitation du téléphone 2' qui implique une transmission par l'intermédiaire du central téléphonique 1 soit pour une utilisation purement téléphonique, soit pour une mise en communication avec l'ensemble d'exploitation 11 pour une commande interactive impliquant simultanément le téléphone 2', le téléviseur 5 associé et l'ensemble d'exploitation 11.

L'autre commutation est effectuée en cas d'exploitation où seules sont recherchées les actions, évoquées plus haut, qui n'agissent qu'au niveau du téléviseur, le passage d'une commutation à l'autre est par exemple déclenché par un microprocesseur de gestion que contient le téléphone 2' en fonction d'un programme de supervision de l'actionnement des touches de clavier téléphonique qui est prévu pour réagir à des actions, simples ou en succession, traduisant les besoins exprimés et les nécessités induites par les actions de l'utilisateur au niveau du clavier.

Dans une forme particulière de réalisation, il est envisagé de positionner fixement l'émetteur de télécommande, tel 8A, par rapport au téléviseur, supposé lui-même en position pratiquement fixe, comme cela est classique pour un téléviseur dans les locaux où un support fixe, par exemple mural est prévu pour le téléviseur. L'émetteur de télécommande 8A est alors susceptible d'être relié au téléphone par une liaison filaire fixe aboutissant par exemple à la partie femelle fixe de la prise téléphonique, souvent murale à laquelle le téléphone vient se raccorder par une prise complémentaire mâle montée en extrémité d'un cordon souple de raccordement du téléphone.

## Revendications

**1/** Système permettant une commande interactive d'application(s) par des utilisateurs à qui une communication d'informations est susceptible d'être effectuée par l'intermédiaire de téléviseurs dans une installation multiservice disposant d'un central téléphonique (1), d'un serveur de distribution de programmes télévisuels (4) et de modules d'utilisateur (6) associant chacun au moins un téléphone (2), rattaché au central téléphonique, et un téléviseur individualisé (5) qui est desservi par l'intermédiaire du serveur et qui est éventuellement équipé d'un dispositif émetteur de télécommande (8) mis à disposition des utilisateurs, le serveur étant doté de moyens (12, 13) pour permettre une transmission d'au moins un programme télévisuel interactif fourni par un ensemble d'exploitation (11) organisé autour d'au moins un ordinateur, caractérisé en ce que l'ensemble d'exploitation est relié à un agencement de commande et de gestion (0) du central téléphonique et dispose de moyens (16, 17) pour produire des indications de commande exploitables par l'homme ou par une machine, à partir d'informations transmises par l'agencement de commande et de gestion du central à réception des signaux codés émis à partir du dispositif de commande (18) d'un téléphone de module, en relation avec des informations de programme télévisuel interactif déterminées, préalablement envoyées par l'ensemble d'exploitation au téléviseur associé à ce téléphone dans le même module d'utilisateur et affichées par ce téléviseur, lors de l'émission des signaux codés de commande par l'intermédiaire du téléphone considéré.

**2/** Système selon la revendication 1, caractérisé en ce qu'il met en oeuvre un ensemble d'exploitation (11) qui dispose d'au moins un programme applicatif frontal (16) pour la mise en oeuvre des procédures de génération des informations, de type vidéotex ou analogue, nécessaires aux sélections d'options qui sont destinées à être transmises à destination de téléviseurs 5 de l'installation et d'au moins un programme d'exploitation combinée (17) pour la prise en compte des actions de commande produites par tout utilisateur, au moyen d'un téléphone 2 d'un module d'utilisateur 6 dont cet utilisateur dispose, en corrélation avec les informations, relatives à un programme télévisuel interactif, alors affichées par le téléviseur 5 de module qui est associé au téléphone 2 dont cet utilisateur se sert.

**3/** Système selon au moins l'une des revendications précédentes, caractérisé en ce que l'ensemble d'exploitation (11) comporte des moyens (16,17) actionnables à partir du dispositif de commande (18) d'un téléphone (2) de module pour télécommander au moins partiellement le téléviseur associé à ce téléphone dans un module.

**4/** Système selon au moins l'une des revendications 1 et 2, caractérisé en ce qu'il met en oeuvre des téléphones (2') qui permettent au moins une commande partielle des téléviseurs associés à eux dans les modules d'utilisateur et qui comportent individuellement un dispositif de commande (18') auquel est intégré un dispositif (8B) permettant une télécommande, sans fil du téléviseur associé à partir d'un émetteur de télécommande (8A), relié par fil au téléphone et préférablement fixé à courte distance du téléviseur considéré.

**5/** Système permettant une commande interactive d'application(s) par des utilisateurs à qui une communication d'informations est susceptible d'être effectuée par l'intermédiaire de téléviseurs dans une installation multiservice disposant d'au moins un central téléphonique (1), un serveur de distribution de programmes télévisuels (4) et des modules d'utilisateur (6) associant chacun au moins un téléphone (2), relié au central téléphonique, et un téléviseur individualisé (5) qui est desservi par l'intermédiaire d'un serveur et qui est équipé d'un dispositif émetteur de télécommande (8) mis à disposition des utilisateurs, tout serveur étant doté de moyens (11, 13) pour permettre la transmission d'au moins un programme télévisuel interactif fourni par un ensemble d'exploitation (11) organisé autour d'au moins un ordinateur, caractérisé en ce que l'ensemble d'exploitation est relié par voie numérique (LT) au central téléphonique au niveau d'un agencement de commande et de gestion (0) de ce central et dispose de moyens (16, 17) pour produire des indications de commande exploitables par l'homme ou par une machine, à partir d'informations transmises sous forme numérique par l'agencement de commande et de gestion du central à réception des signaux codés émis à partir du dispositif de commande (18) d'un téléphone de module, en relation avec des informations déterminées de programme télévisuel interactif, préalablement envoyées par l'ensemble d'exploitation au téléviseur associé à ce téléphone dans le même module d'utilisateur et affichées par ce téléviseur, lors de l'émission des signaux codés de commande par l'intermédiaire du téléphone considéré et en ce que l'ensemble d'exploitation (11) est scindé en au moins un sous-ensemble local, associé à un serveur et disposant d'un programme applicatif frontal (16) pour la mise en oeuvre des procédures de génération des informations déterminées de programme télévisuel interactif, nécessaires aux sélections d'options, qui sont destinées à être transmises à destination de téléviseurs (5) identifiés de l'installation et au moins un sous-ensemble central disposant d'un programme d'exploitation combinée (17) pour la prise en compte des actions de commande produites par tout utilisateur de l'installation, au moyen d'un téléphone (2) d'un module (6) dont cet utilisateur dispose, en corrélation avec les informations, relatives à un programme télévisuel interactif de service, alors affichées par le téléviseur (5) de module qui est associé au téléphone (2) dont cet utilisateur se sert, ledit sous-ensemble central étant raccordé par voie numérique tant à l'agencement de commande et de gestion (0) du central téléphonique auquel sont reliés les téléphones des modules d'utilisateur qu'à tout sous-ensemble local de l'installation.
